(19) Europäisches Patentamt
European Patent Office
Office européen des brevets

(11) EP 4 509 543 A1

(12) EUROPEAN PATENT APPLICATION
published in accordance with Art. 153(4) EPC

(43) Date of publication:
**19.02.2025 Bulletin 2025/08**

(21) Application number: **23788273.3**

(22) Date of filing: **07.04.2023**

(51) International Patent Classification (IPC):
***C08G 63/60*** *(2006.01)* ***C08K 3/013*** *(2018.01)*
***C08L 67/00*** *(2006.01)*

(52) Cooperative Patent Classification (CPC):
**C08G 63/60; C08K 3/013; C08L 67/00**

(86) International application number:
**PCT/JP2023/014353**

(87) International publication number:
**WO 2023/199854 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.04.2022 JP 2022064980**
**26.05.2022 JP 2022085736**

(71) Applicant: **Toray Industries, Inc.**
**Tokyo 103-8666 (JP)**

(72) Inventors:
- **TANABE Junki**
**Nagoya-shi, Aichi 455-8502 (JP)**
- **KONISHI Akito**
**Nagoya-shi, Aichi 455-8502 (JP)**
- **NAKAGAWA Hiroshi**
**Nagoya-shi, Aichi 455-8502 (JP)**
- **UMETSU Hideyuki**
**Nagoya-shi, Aichi 455-8502 (JP)**

(74) Representative: **Mewburn Ellis LLP**
**Aurora Building**
**Counterslip**
**Bristol BS1 6BX (GB)**

# (54) LIQUID CRYSTAL POLYESTER RESIN, LIQUID CRYSTAL POLYESTER RESIN COMPOSITION, AND MOLDED PRODUCT COMPRISING SAME

(57) A liquid crystal polyester resin including a structural unit derived from aromatic hydroxycarboxylic acid, a structural unit derived from aromatic diol, and a structural unit derived from aromatic dicarboxylic acid, wherein a content of the structural unit derived from aromatic hydroxycarboxylic acid is 15 to 80 mol%, a content of the structural unit derived from aromatic diol is 2 to 40 mol%, a content of the structural unit derived from aromatic dicarboxylic acid is 2 to 40 mol%, relative to 100 mol% of the total structural unit of the liquid crystal polyester resin, and a temperature sensitivity coefficient and a solidification start temperature, obtained from rheometer spectra, are within a certain range. The liquid crystal polyester resin which is moldable at a wide range of molding temperatures, has excellent molding stability, and has small thickness dependency of fluidity is obtained.

Fig. 1

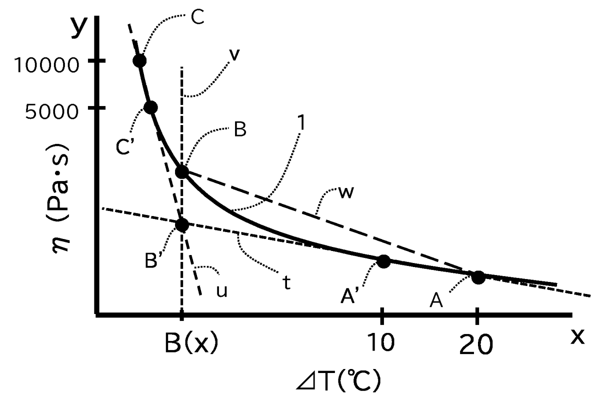


EP 4 509 543 A1

**Description**

Technical Field

The present invention relates to a liquid crystal polyester resin, a liquid crystal polyester resin composition, and a molded article formed therefrom.

Background Art

A liquid crystal polyester resin has excellent heat resistance, fluidity, and dimensional stability, and therefore used for electric and electronic components where these properties are required. In recent years, with the miniaturization of smartphones and other devices, there is an increasing demand for components with higher integration, thinner walls, lower heights, and other features. For example, liquid crystal polyester resins including structural units derived from p-hydroxybenzoic acid, 6-hydroxy-2-naphthoic acid, 4,4'-dihydroxybiphenyl, hydroquinone, and terephthalic acid (e.g., Patent Literatures 1 to 4), liquid crystal polyester resins including structural units derived from p-hydroxybenzoic acid, 6-hydroxy-2-naphthoic acid, 4,4'-dihydroxybiphenyl, terephthalic acid, and isophthalic acid (e.g., Patent Literature 5), liquid crystal polyester resins including structural units derived from p-hydroxybenzoic acid, 6-hydroxy-2-naphthoic acid, hydroquinone, terephthalic acid, and isophthalic acid (e.g., Patent Literature 6) have been proposed to achieve both high strength and blister resistance while having excellent fluidity. In addition, liquid crystal polyester resins including structural units derived from p-hydroxybenzoic acid, 4,4'-dihydroxybiphenyl, hydroquinone, terephthalic acid, and isophthalic acid (e.g., Patent Literatures 7 and 8) have been proposed to achieve both rigidity and retention stability.

Citation List

Patent Literature

Patent Literature 1: JP 2021-24985A
Patent Literature 2: JP 2017-137438 A
Patent Literature 3: WO 2018/101214
Patent Literature 4: JP 2012-126842 A
Patent Literature 5: WO 2012/137636
Patent Literature 6: WO 2013/51346
Patent Literature 7: Japanese Unexamined Patent Application Publication (Translation of PCT Application) No. 2016-523291
Patent Literature 8: JP 2004-256656 A

Summary of Invention

Technical Problem

However, when the molding temperature is high, resins with excellent fluidity may cause drooling (a phenomenon of leakage and sagging from the tip of the nozzle during molding) and stringiness (a phenomenon where a resin that has not completely solidified extends in filaments from the tip of a sprue at the time of mold opening) during molding, as well as gas emission, resulting in reduced productivity and the like, thereby degrading the quality of the molded article. To prevent such problems, the molding temperature may be lowered. However, the techniques described in the patent literatures 1 to 8 have problem that when the molding temperature is excessively lowered, the resin partially solidifies, which tends to cause variation in fluidity and results in narrow moldable temperature range. Moreover, because of high thickness dependency of fluidity, there is a problem that the variation is likely to occur in fluidity at the time of molding a molded article having portions with different thicknesses. Furthermore, in production using injection molding, the molding machine must be repeatedly stopped and restarted (recovered) due to product-type changeovers, molding problems, etc., so it is important to increase molding stability by shortening the time required to obtain good products after recovery. The methods described in Patent Literatures 1 to 8 had problems with molding stability.

An object of the present invention is to provide a liquid crystal polyester resin that is moldable at a wide range of molding temperatures, has excellent molding stability, and has low thickness dependency of fluidity, and a liquid crystal polyester resin composition, and a molded article made of the liquid crystal polyester resin composition.

Solution to Problem

As a result of an intensive study to solve the above problems, the present inventors have found that a liquid crystal polyester resin including 15 to 80 mol% of structural units derived from aromatic hydroxycarboxylic acid, 2 to 40 mol% of structural units derived from aromatic diol, and 2 to 40 mol% of structural units derived from aromatic dicarboxylic acid, relative to 100 mol% of the total structural units of the liquid crystal polyester, and having temperature sensitivity coefficient and solidification start temperature mentioned later controlled, is moldable at a wide range of molding temperatures, has excellent molding stability, and has low thickness dependency of fluidity, and have attained the present invention.
That is, the present invention is as follows.

(1) A liquid crystal polyester resin including a structural unit derived from aromatic hydroxycarboxylic acid, a structural unit derived from aromatic diol, and a structural unit derived from aromatic dicarboxylic acid,
wherein a content of the structural unit derived from aromatic hydroxycarboxylic acid is 15 to 80 mol%, a content of the structural unit derived from aromatic diol is 2 to 40 mol%, a content of the structural unit derived from aromatic dicarboxylic acid is 2 to 40 mol%, relative to 100 mol% of the total structural unit of the liquid crystal polyester resin, and the following requirement ($\alpha$) is satisfied:

($\alpha$): a temperature sensitivity coefficient measured as described below is 0.020 or less, and B(x) is - 35 to - 15°C;
for a rheometer spectral curve of the liquid crystal polyester resin obtained by measuring the liquid crystal polyester resin as described below using a rheometer and plotting $\Delta T$ (°C) = measurement temperature - Tm (°C) on the x-axis and logarithm of a complex viscosity (log($\eta$(Pa·s))) on the y-axis, where Tm (°C) is a melting point of the liquid crystal polyester resin, taking a point where $\Delta T$ = 20°C as a point A, a point where $\Delta T$ = 10°C as a point A', a point where a complex viscosity $\eta$ is 10,000 Pa·s at a temperature equal to or lower than the melting point as a point C, a point where the complex viscosity $\eta$ is 5,000 Pa·s as a point C', a straight line passing through the point A and the point A' as a straight line t, a straight line passing through the point C and the point C' as a straight line u, an intersection of the straight line t and the straight line u as a point B', a straight line passing through the point B' and parallel to the y-axis as a straight line v, and an intersection of the straight line v and the rheometer spectral curve as a point B, an absolute value of the slope of the straight line w connecting the point A and the point B is defined as a temperature sensitivity coefficient, and a value of $\Delta T$ at the point B is defined as B(x);
the rheometer spectral curve is a curve obtained with a rheometer in a vibration measurement mode at a gap between parallel plates of 1 mm, strain of 10%, and frequency of 1 Hz, by maintaining at a temperature of Tm + 30°C for 5 minutes and then decreasing the temperature at 0.17 °C/sec to a temperature at which the complex viscosity reaches 50,000 (Pa·s); and
the melting point Tm of the liquid crystal polyester resin is an endothermic peak temperature determined as follows: after observation of an endothermic peak temperature $Tm_1$ observed when a liquid crystal polyester is heated under temperature rising conditions of 20°C/min from room temperature in differential scanning calorimetry, the liquid crystal polyester is maintained at a temperature of $Tm_1$ + 20°C for 5 minutes, and then the liquid crystal polyester resin is once cooled to room temperature under temperature falling conditions of 20°C/min and then heated again under temperature rising conditions of 20°C/min, and the endothermic peak temperature thus obtained is defined as the melting point Tm.

(2) The liquid crystal polyester resin according to claim 1, including the structural unit selected from the structural units (I) to (V) below, wherein the following requirements (a) to (d) are satisfied:

$$25 \leq [I] \leq 75 \quad \cdots (a)$$

$$1 \leq [II] \leq 20 \quad \cdots (b)$$

$$2 \leq [III] + [IV] \leq 35 \quad \cdots (c)$$

$$2 \leq [V] \leq 35 \quad \cdots (d)$$

where [I] to [V] respectively represent contents (mol%) of the structural units (I) to (V) below, relative to 100 mol% of the total structural unit of the liquid crystal polyester resin.

[Chem 1]

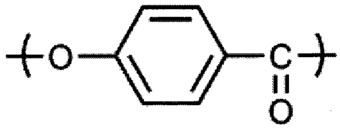

(I)

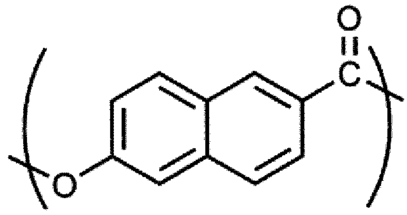

(II)

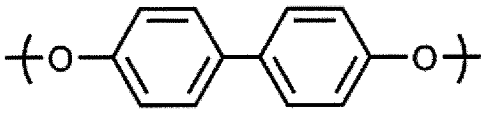

(III)

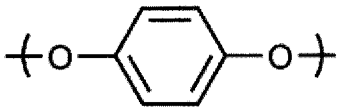

(IV)

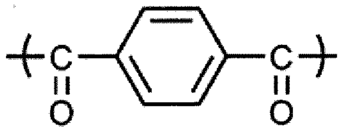

(V)

(3) The liquid crystal polyester resin according to claim 1 or 2, including the structural units (II) and (VI) below, wherein the following requirements (e) and (f) are satisfied:

$$0.01 \leq [VI] \leq 10 \quad \cdots (e)$$

$$[VI]/[II] < 1 \quad \cdots (f)$$

where [II] and [VI] respectively represent contents (mol%) of the structural units (II) and (VI) below, relative to 100 mol% of the total structural unit of the liquid crystal polyester resin.

[Chem. 2]

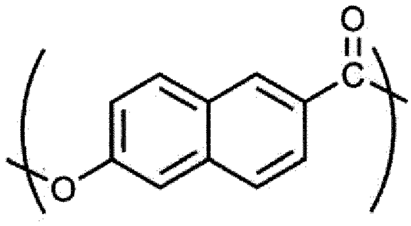

(II)

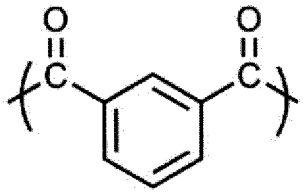

(VI)

(4) The liquid crystal polyester resin according to any one of claims 1 to 3, including a structural unit selected from the structural units (I) to (VI) below, wherein the following requirements (g) to (l) are satisfied:

$$25 \leq [I] \leq 75 \quad \cdots (g)$$

$$1 \leq [II] \leq 20 \quad \cdots (h)$$

$$2 \leq [III] + [IV] \leq 35 \quad \cdots (i)$$

$$2 \leq [V] \leq 35 \quad \cdots (j)$$

$$0.01 \leq [VI] \leq 10 \quad \cdots (k)$$

$$[VI]/[II] < 1 \quad \cdots (l)$$

where [I] to [VI] respectively represent contents (mol%) of the structural units (I) to (VI) below, relative to 100 mol% of the total structural unit of the liquid crystal polyester resin.

[Chem. 3]

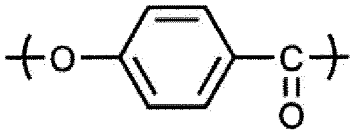

(I)

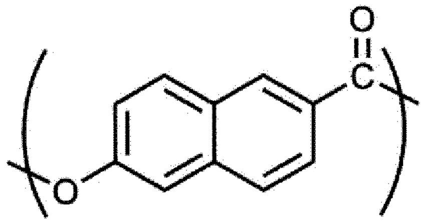

(II)

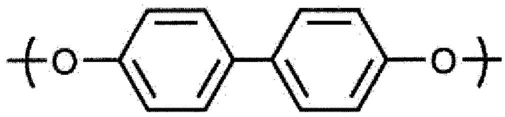

(III)

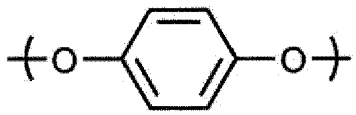

(IV)

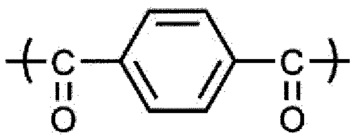

(V)

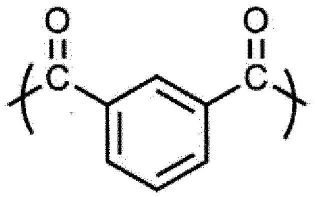

(VI)

(5) The liquid crystal polyester resin according to any one of claims 1 to 4, wherein the following requirement (m) is further satisfied:

$$0 < [III]/[IV] < 1.5 \cdots (m)$$

where [III] and [IV] respectively represent contents (mol%) of the structural units (III) and (IV) below, relative to 100 mol% of the total structural unit of the liquid crystal polyester resin.

(6) The liquid crystal polyester resin according to any one of claims 1 to 5, wherein the following requirement (n) is further satisfied:

$$99 \leq [I] + [II] + [III] + [IV] + [V] + [VI] \leq 100 \cdots (n)$$

where [I] to [VI] respectively represent a content (mol%) of the structural units (I) to (VI), relative to 100 mol% of the total structural unit of the liquid crystal polyester resin.

(7) The liquid crystal polyester resin composition according to any one of (1) to (6), containing 10 to 200 parts by weight of a filler relative to 100 parts by weight of the liquid crystal polyester resin.

(8) A molded article including the liquid crystal polyester resin according to any one of (1) to (6), or the liquid crystal polyester resin composition according to(7).

(9) The molded article according to (8), wherein the molded article is any one selected from the group consisting of a connector, a relay, a switch, a coil bobbin, and an actuator component of a camera module.

## Advantageous Effects of Invention

The liquid crystal polyester resin of the present invention is moldable at a wide range of molding temperatures, has excellent molding stability, and has low thickness dependency of fluidity. The liquid crystal polyester resin of the present invention can be suitably used, particularly in molding small electric and electronic components and the like.

## Brief Description of Drawings

FIG. 1 is a diagram of a rheometer spectral curve illustrating the requirement (α) satisfied by the liquid crystal polyester resin of the present invention.
FIG. 2 shows rheometer spectral curves obtained by measuring the liquid crystal polyester resin of the present invention and a conventional liquid crystal polyester resin.
FIG. 3 is a perspective view showing a molded article of connector used in evaluation of molding stability.

## Description of Embodiments

The present invention will be described in detail below.

### <Liquid Crystal Polyester Resin>

The liquid crystal polyester resin is a polyester which forms an anisotropic molten phase. Examples of such a polyester resin include polyesters composed of structural units selected to form an anisotropic molten phase from an oxycarbonyl unit, a dioxy unit, a dicarbonyl unit and the like, which will be mentioned later.
Next, the temperature sensitivity coefficient of the liquid crystal polyester resin obtained from the rheometer spectral curve will be described. The liquid crystal polyester resin of the present invention satisfies the requirement (α):

(α): the temperature sensitivity coefficient, measured as follows, is 0.020 or less, and B(x) is from - 35 to - 15°C;
Methods of determining the above-described temperature sensitivity coefficient and B(x) will be explained with reference to FIG. 1. The liquid crystal polyester resin is measured with a rheometer described below, and a rheometer spectral curve 1 of the liquid crystal polyester resin shown in FIG. 1 is obtained by plotting ΔT (°C) = measurement temperature - Tm (°C) on the x-axis, and logarithm of a complex viscosity (log(η(Pa·s))) on the y-axis, where Tm (°C) represents a melting point of the liquid crystal polyester resin. For a rheometer spectral curve 1 of the liquid crystal polyester resin a point where ΔT = 20°C is taken as a point A, a point where ΔT = 10°C is taken as a point A', a point where a complex viscosity η is 10,000 Pa·s at a temperature equal to or lower than a melting point is taken as a point C, and a point where the complex viscosity η is 5,000 Pa·s is taken as a point C'. Taking a straight line passing through the point A and the point A' as a straight line t, a straight line passing through the point C and the point C' is taken as a straight line u, an intersection of the straight line t and the straight line u as a point B', a straight line passing through the point B' and parallel to the y-axis as a straight line v, and an intersection of the straight line v and the rheometer spectral curve 1 as a point B, an absolute value of the slope of the straight line w connecting the point A and the point B is defined as a temperature sensitivity coefficient, and a value of ΔT at the point B is defined as B(x).

The above-described rheometer spectral curve is obtained with the rheometer in a vibration measurement mode, with a parallel plate gap of 1 mm, distortion of 10%, and frequency of 1 Hz, while the temperature is maintained at Tm + 30°C for 5 minutes, and then lowered at a rate of 0.17°C/sec to a temperature at which a complex viscosity is 50,000 (Pa-s).
The melting point Tm of the above-described liquid crystal polyester resin is an endothermic peak temperature observed in differential scanning calorimetry as follows: after observation of an endothermic peak temperature $Tm_1$, which is observed when the liquid crystal polyester resin is heated from room temperature under temperature rising conditions of 20 °C/ min, is observed, then the temperature is maintained at $Tm_1$ + 20°C for 5 minutes, then the temperature is cooled to room temperature under temperature falling conditions of 20 °C/ min, and increased again at a temperature rising condition of 20 °C/ min again, and the endothermic peak temperature thus obtained is defined as the melting point Tm.
Rheometer measurement is a method of evaluating a rheological property (flow property) which is one of the important properties of the resin. The above-described temperature sensitivity coefficient is a coefficient obtained from the rheometer spectrum as described above, and is a value defined by an absolute value of a slope of a straight line w connecting points A and B. The temperature sensitivity coefficient indicates a magnitude of change in dynamic viscosity (complex viscosity) of the liquid crystal polyester resin with respect to temperature under shear conditions. A lower temperature sensitivity coefficient indicates that the flow property of the liquid crystal polyester resin is less likely to change

in response to external factors such as temperature and shear. In the present invention, it is found that liquid crystal polyester resins, particularly those having a temperature sensitivity coefficient of 0.020 or less are moldable at a wide range of molding temperatures, have molding stability, and have low thickness dependency of fluidity. When the temperature sensitivity coefficient is more than 0.020, it becomes difficult to control the behavior of the liquid crystal polyester resin from melting to solidification, resulting in a narrower moldable temperature range and greater thickness dependency of fluidity. Liquid crystal polyester resins with a temperature sensitivity coefficient more than 0.020 have their fluidity changed by slight differences in temperature in various parts of the molding machine, so it takes time to obtain a good product after the molding machine is restarted after being stopped, and molding stability is reduced. From the viewpoints of the moldable temperature range, molding stability, and thickness dependency of fluidity, the temperature sensitivity coefficient is preferably 0.018 or less, and more preferably 0.016 or less. The lower temperature sensitivity coefficient is more preferable, and the minimum value is 0.

Furthermore, in the liquid crystal polyester resin of the present invention, B(x) which is a value of $\Delta T$ at the point B shown in the above requirement ($\alpha$), is from -35 to -15°C. B(x) is a temperature at which the liquid crystal polyester resin starts to solidify under shear conditions (hereinafter, B(x) may be referred to as a solidification start temperature). When B(x) is lower than -35°C, burrs and drawling from the tip of the nozzle at the time of molding become a problem, and the moldable temperature range becomes narrower. When B(x) is more than - 15°C, it becomes difficult to control the solidification behavior of the liquid crystal polyester resin, resulting in a narrower moldable temperature range, poor molding stability, and greater thickness dependency of fluidity. B(x) is preferably - 30°C or more, more preferably - 28°C or more. B(x) is preferably - 16°C or less, more preferably - 18°C or less, still more preferably - 20°C or less.

FIG. 2 illustrates an example of a rheometer spectral curve of the liquid crystal polyester resin of the present invention (S1) and an example of a rheometer spectral curve of the conventional liquid crystal polyester resin (S2). FIG. 2 also illustrates straight lines L1 and L2 each representing a temperature sensitivity coefficient defined above. As illustrated in FIG. 2, an absolute value of the slope of L1 is smaller than that of L2, indicating that the temperature sensitivity coefficient of the liquid crystal polyester resin of the present invention is smaller than the temperature sensitivity coefficient of the conventional liquid crystal polyester resin.

Comparison of the spectral curves of S1 and S2 in FIG. 2 shows that the viscosity change of S1 is suppressed at a temperature equal to or more than the solidification start temperature B(x), and as the temperature decreases, the viscosity increases rapidly from near the solidification start temperature. The liquid crystal polyester resin of the present invention, which exhibits a viscosity change behavior like S1, is moldable at a wide range of molding temperatures, and has properties of excellent molding stability and small thickness dependency of fluidity. The value quantitatively indicating that the rheometer spectral curve has the same shape as S1 is the temperature sensitivity coefficient defined above.

Examples of methods to control the temperature sensitivity coefficient and solidification start temperature described above within a suitable range include adjusting the structural units constituting the liquid crystal polyester resin within a preferred range described below, and/or setting a method of producing the liquid crystal polyester resin to a preferred method described below. Details are described in the following structural units constituting the liquid crystal polyester resins and "Method of producing liquid crystal polyester resin" described below.

Next, the structural units constituting the liquid crystal polyester resin will be described below.

The liquid crystal polyester resin of the present invention includes a structural unit derived from aromatic hydroxycarboxylic acid, a structural unit derived from aromatic diol, and a structural unit derived from aromatic dicarboxylic acid.

The liquid crystal polyester resin of the present invention includes, as the oxycarbonyl unit, 15 to 80 mol% of a structural unit derived from aromatic hydroxycarboxylic acid relative to 100 mol% of the total structural units of the liquid crystal polyester resin. When the content of the structural unit derived from aromatic hydroxycarboxylic acid is less than 15%, the moldable temperature range becomes narrower due to impaired liquid crystallinity. The content is preferably 20 mol% or more, more preferably 25 mol% or more. On the other hand, when the content is more than 80 mol%, it becomes difficult to control the crystallinity and melting point of the liquid crystal polyester resin, and the moldable temperature range becomes narrower. The content is preferably 75 mol% or less, more preferably 70 mol% or less. Specific examples of the structural unit derived from aromatic hydroxycarboxylic acid that can be used include structural units derived from p-hydroxybenzoic acid, m-hydroxybenzoic acid, and 6-hydroxy-2-naphthoic acid.

The liquid crystal polyester resin of the present invention includes, as the dioxy unit, 2 to 40 mol% of a structural unit derived from aromatic diol relative to 100 mol% of the total structural units of the liquid crystal polyester resin. When the content of the structural unit derived from aromatic diol is less than 2 mol%, it becomes difficult to control the crystallinity and melting point of the liquid crystal polyester resin, and the moldable temperature range becomes narrower. The content is preferably 7 mol% or more, more preferably 10 mol% or more. On the other hand, when the content is more than 40 mol%, the moldable temperature range becomes narrower due to impaired liquid crystallinity. The content is preferably 37 mol% or less, more preferably 35 mol% or less. Examples of the structural unit derived from aromatic diol include structural units derived from 4,4'-dihydroxybiphenyl, hydroquinone, resorcinol, t-butylhydroquinone, phenylhydroquinone, chlorohydroquinone, 2,6-dihydroxynaphthalene, 2,7-dihydroxynaphthalene, 3,4'-dihydroxybiphenyl, 2,2-bis(4-hydroxyphenyl)propane, 4,4'-dihydroxydiphenylether, 4,4'-dihydroxydiphenylsulfone, 4,4'-dihydroxydiphenylsulfide, and 4,4'-dihydroxybenzophenone. From the viewpoint of excellent availability and excellent moldable temperature range, a structural unit derived from 4,4'-dihydroxybiphenyl or hydroquinone is preferably used.

The liquid crystal polyester resin of the present invention includes, as the dicarbonyl unit, 2 to 40 mol% of a structural unit derived from aromatic dicarboxylic acid relative to 100 mol% of the total structural units of the liquid crystal polyester resin. When the content of the structural unit derived from aromatic dicarboxylic acid is less than 2 mol%, it becomes difficult to control the crystallinity and melting point of the liquid crystal polyester resin, and the moldable temperature range becomes narrower. The content is preferably 7 mol% or more, more preferably 10 mol% or more. On the other hand, when the content is more than 40 mol%, the moldable temperature range becomes narrower due to impaired liquid crystallinity. The content is preferably 37 mol% or less, more preferably 35 mol% or less. Examples of the structural unit derived from aromatic dicarboxylic acid include structural units derived from terephthalic acid, isophthalic acid, 2,6-naphthalenedicarboxylic acid, 4,4'-diphenyldicarboxylic acid, 3,3'-diphenyldicarboxylic acid, 2,2'-diphenyldicarboxylic acid, 1,2-bis(phenoxy)ethane-4,4'-dicarboxylic acid, 1,2-bis(2-chlorophenoxy)ethane-4,4'-dicarboxylic acid, and 4,4'-diphenyletherdicarboxylic acid. From the viewpoint of excellent availability and excellent moldable temperature range, a structural unit derived from terephthalic acid or isophthalic acid is preferably included.

Next, the structural units constituting the liquid crystal polyester resin will be described below in more detail. From the viewpoint of being moldable at a wide range of molding temperatures, having excellent molding stability, and having low thickness dependency of fluidity, it is preferable for the liquid crystal polyester resin of the present invention to include structural units selected from the following structural units (I) to (V), and to satisfy the following requirements (a) to (d):

$$25 \leq [I] \leq 75 \qquad \cdots(a)$$

$$1 \leq [II] \leq 20 \qquad \cdots(b)$$

$$2 \leq [III] + [IV] \leq 35 \qquad \cdots(c)$$

$$2 \leq [V] \leq 35 \qquad \cdots(d)$$

[I] to [V] are the content of each of structural units (I) to (V), respectively, relative to 100 mol% of the total structural units of the liquid crystal polyester resin.

[Chem. 4]

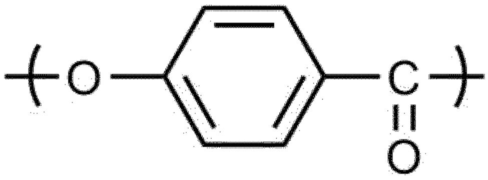

(I)

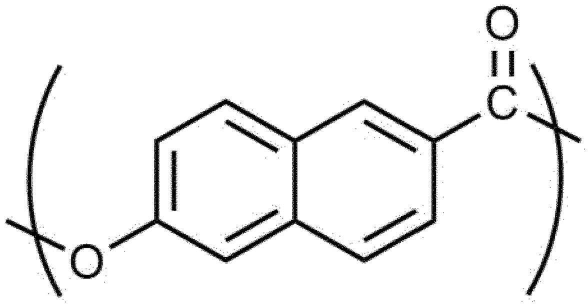

(II)

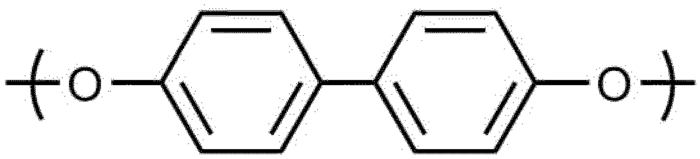

(III)

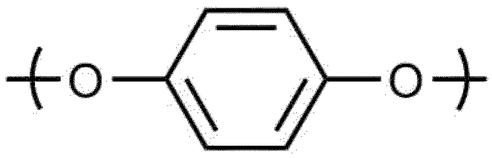

(IV)

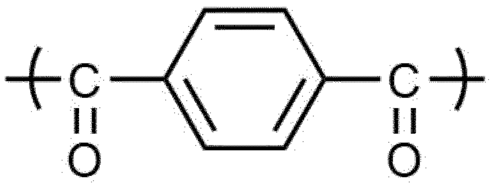

(V)

The liquid crystal polyester resin of the present invention preferably includes, as the oxycarbonyl unit, 25 mol% or more of the structural unit (I) relative to 100 mol% of the total structural units of the liquid crystal polyester resin. The structural unit (I) is a structural unit derived from p-hydroxybenzoic acid.
From the viewpoint of being moldable at a wide range of molding temperatures, having excellent molding stability, and having low thickness dependency of fluidity, the content of the structural unit (I) is preferably 35 mol% or more, more preferably 45 mol% or more.
On the other hand, the liquid crystal polyester resin of the present invention preferably includes 75 mol% or less of the structural unit (I) relative to 100 mol% of the total structural units of the liquid crystal polyester resin. From the viewpoint of being moldable at a wide range of molding temperatures, having excellent molding stability, and having low thickness dependency of fluidity, the content of the structural unit (I) is preferably 65 mol% or less, more preferably 55 mol% or less.
The liquid crystal polyester resin of the present invention preferably includes, as the oxycarbonyl unit, 1 mol% or more of the structural unit (II) relative to 100 mol% of the total structural units of the liquid crystal polyester resin. The structural unit (II) is a structural unit derived from 6-hydroxy-2-naphthoic acid. From the viewpoint of being moldable at a wide range of molding temperatures, having excellent molding stability, and having low thickness dependency of fluidity, the content of the structural unit (II) is preferably 2 mol% or more, more preferably 3 mol% or more.
On the other hand, the liquid crystal polyester resin of the present invention preferably includes 20 mol% or less of the structural unit (II) relative to 100 mol% of the total structural units of the liquid crystal polyester resin. From the viewpoint of being moldable at a wide range of molding temperatures, having excellent molding stability, and having low thickness dependency of fluidity, the content of the structural unit (II) is preferably 15 mol% or less, more preferably 10 mol% or less.
In the liquid crystal polyester resin of the present invention, from the viewpoint of being moldable at a wide range

of molding temperatures, having excellent molding stability, and having low thickness dependency of fluidity, a molar ratio of the contents of the structural units (I) and (II) ([I] / [II]) is preferably 3 or more, more preferably 5 or more, and still more preferably 7 or more. On the other hand, from the viewpoint of being moldable at a wide range of molding temperatures, and having low thickness dependency of fluidity, [I] / [II] is preferably 20 or less, more preferably 18 or less, and still more preferably 16 or less.

In addition, it is possible to use, as the oxycarbonyl unit, a structural unit derived from m-hydroxybenzoic acid or the like as long as the effect of the present invention is not impaired.

The liquid crystal polyester resin of the present invention preferably includes a structural unit (III) as the dioxy unit. The structural unit (III) is a structural unit derived from 4,4'-dihydroxybiphenyl. From the viewpoint of being moldable at a wide range of molding temperatures, having excellent molding stability, and having low thickness dependency of fluidity, the content of the structural unit (III) is preferably 1 mol% or more, more preferably 3 mol% or more, and still more preferably 5 mol% or more, relative to 100 mol% of the total structural units of the liquid crystal polyester resin. On the other hand, from the viewpoint of being moldable at a wide range of molding temperatures, and having low thickness dependency of fluidity, the content of the structural unit (III) is preferably 25 mol% or less, more preferably 20 mol% or less, and still more preferably 15 mol% or less.

The liquid crystal polyester resin of the present invention preferably includes, as the dioxy unit, a structural unit (IV). The structural unit (IV) is a structural unit derived from hydroquinone. From the viewpoint of being moldable at a wide range of molding temperatures, having excellent molding stability, and having low thickness dependency of fluidity, the content of the structural unit (IV) is preferably 1 mol% or more, more preferably 4 mol% or more, and still more preferably 7 mol% or more, relative to 100 mol% of the total structural units of the liquid crystal polyester resin. On the other hand, from the viewpoint of being moldable at a wide range of molding temperatures, having excellent molding stability, and having low thickness dependency of fluidity, the content of the structural unit (IV) is preferably 30 mol% or less, more preferably 25 mol% or less, and still more preferably 20 mol% or less.

In the liquid crystal polyester resin of the present invention, the total content of the structural units (III) and (IV) is preferably 2 mol% or more relative to 100 mol% of the total structural units of the liquid crystal polyester resin. From the viewpoint of being moldable at a wide range of molding temperatures, having excellent molding stability, and having low thickness dependency of fluidity, the total content of the structural units (III) and (IV) is preferably 5 mol% or more, more preferably 10 mol% or more, and still more preferably 15 mol% or more.

On the other hand, in the liquid crystal polyester resin of the present invention, the total content of the structural units (III) and (IV) is preferably 35 mol% or less relative to 100 mol% of the total structural units of the liquid crystal polyester resin. From the viewpoint of being moldable at a wide range of molding temperatures, having excellent molding stability, and having low thickness dependency of fluidity, the total content of the structural units (III) and (IV) is preferably 30 mol% or less, more preferably 25 mol% or less.

In the liquid crystal polyester resin of the present invention, from the viewpoint of being moldable at a wide range of molding temperatures, having excellent molding stability, and having low thickness dependency of fluidity, the molar ratio of the contents of the structural units (III) and (IV) ([III] / [IV]) is preferably more than 0, more preferably 0.3 or more, and still more preferably 0.6 or more. On the other hand, from the viewpoint of being moldable at a wide range of molding temperatures, and having low thickness dependency of fluidity, [III] / [IV] is preferably less than 1.5, more preferably 1.2 or less, and still more preferably 1.0 or less.

In addition, as the dioxy unit, structural unit derived from aromatic diols such as resorcinol, t-butylhydroquinone, phenylhydroquinone, chlorohydroquinone, 2,6-dihydroxynaphthalene, 2,7-dihydroxynaphthalene, 3,4'-dihydroxybiphenyl, 2,2-bis(4-hydroxyphenyl)propane, 4,4'-dihydroxydiphenyl ether, 4,4'-dihydroxydiphenylsulfone, 4,4'-dihydroxydiphenylsulfide, and 4,4'-dihydroxybenzophenone; structural units derived from aliphatic diols such as ethylene glycol, propylene glycol, 1,4-butanediol, 1,6-hexanediol, and neopentyl glycol; structural units derived from alicyclic diols such as 1,4-cyclohexanediol, and 1,4-cyclohexanedimethanol can be used as long as the effect of the present invention is not impaired.

The liquid crystal polyester resin of the present invention preferably includes, as the dicarbonyl unit, 2 mol% or more of the structural unit (V) relative to 100 mol% of the total structural units of the liquid crystal polyester resin. The structural unit (V) is a structural unit derived from terephthalic acid. From the viewpoint of being moldable at a wide range of molding temperatures, having excellent molding stability, and having low thickness dependency of fluidity, the content of the structural unit (V) is preferably 5 mol% or more, more preferably 10 mol% or more, and still more preferably 15 mol% or more.

On the other hand, the liquid crystal polyester resin of the present invention preferably includes 35 mol% or less of the structural unit (V) relative to 100 mol% of the total structural units of the liquid crystal polyester resin. From the viewpoint of being moldable at a wide range of molding temperatures, having excellent molding stability, and having low thickness dependency of fluidity, the content of the structural unit (V) is preferably 30 mol% or less, more preferably 25 mol% or less.

In addition, it is preferable for the liquid crystal polyester resin of the present invention to include the following structural units (II) and (VI), and to satisfy the following requirements (e) and (f):

$$0.01 \leq [VI] \leq 10 \quad \cdots(e)$$

$$[VI] / [II] < 1 \quad \cdots(f)$$

[II] and [VI] respectively represent contents (mol%) of the structural units (II) and (VI), relative to 100 mol% of the total structural unit of the liquid crystal polyester resin:

[Chem. 5]

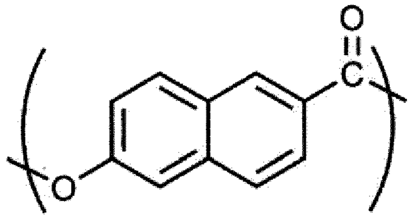

(II)

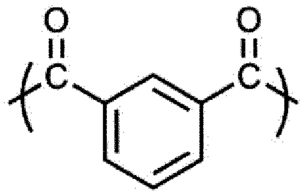

(VI)

The liquid crystal polyester resin of the present invention preferably includes, as the dicarbonyl unit, 0.01 mol% or more of the structural unit (VI) relative to 100 mol% of the total structural units of the liquid crystal polyester resin. The structural unit (VI) is a structural unit derived from isophthalic acid. From the viewpoint of being moldable at a wide range of molding temperatures, having excellent molding stability, and having low thickness dependency of fluidity, the content of the structural unit (VI) is preferably 0.05 mol% or more, more preferably 0.1 mol% or more.

On the other hand, the liquid crystal polyester resin of the present invention preferably includes 10 mol% or less of the structural unit (VI) relative to 100 mol% of the total structural units of the liquid crystal polyester resin. From the viewpoint of being moldable at a wide range of molding temperatures, having excellent molding stability, and having low thickness dependency of fluidity, the content of the structural unit (VI) is preferably 7 mol% or less, more preferably 4 mol% or less.

In addition, as the dicarbonyl unit, structural units derived from aromatic dicarboxylic acids such as 2,6-naphthalenedicarboxylic acid, 4,4'-diphenyldicarboxylic acid, 3,3'-diphenyldicarboxylic acid, 2,2'-diphenyldicarboxylic acid, 1,2-bis(phenoxy)ethane-4,4'-dicarboxylic acid, 1,2-bis(2-chlorophenoxy)ethane-4,4'-dicarboxylic acid, and 4,4'-diphenyletherdicarboxylic acid; structural units derived from aliphatic dicarboxylic acids such as adipic acid, azelaic acid, sebacic acid, dodecanedioic acid, and hexahydroterephthalic acid; and structural units derived from alicyclic dicarboxylic acids such as 1,4-cyclohexanedicarboxylic acid, and 1,3-cyclohexanedicarboxylic acid can be used as long as the effect of the present invention is not impaired.

In the liquid crystal polyester resin of the present invention, the molar ratio of the contents of the structural units (VI) and (II) ([VI]/[II]) is preferably less than 1. From the viewpoint of being moldable at a wide range of molding temperatures, having excellent molding stability, and having low thickness dependency of fluidity, the molar ratio of the contents ([VI]/[II]) of structural units (VI) and (II) is preferably 0.9 or less. On the other hand, the lower limit of [VI]/[II] is not particularly limited, and is preferably 0.005 or more. From the viewpoint of being moldable at a wide range of molding temperatures, and having low thickness dependency of fluidity, [VI]/[II] is preferably 0.01 or more, more preferably 0.05 or more.

From the viewpoint of more readily controlling the temperature sensitivity coefficient and solidification start temperature described above within preferable ranges, being moldable at a wide range of molding temperatures, having excellent molding stability, and having low thickness dependency of fluidity, it is preferable for the liquid crystal polyester resin of the present invention to include all of structural units selected from the following structural units (I) to (VI), and to satisfy the following requirements (g) to (l):

$$25 \leq [I] \leq 75 \quad \cdots(g)$$

$$1 \leq [II] \leq 20 \quad \cdots(h)$$

$$2 \leq [III] + [IV] \leq 35 \quad \cdots(i)$$

$$2 \leq [V] \leq 35 \quad \cdots(j)$$

$$0.01 \leq [VI] \leq 10 \quad \cdots(k)$$

$$[VI]/[II] < 1 \quad \cdots(l)$$

[I] to [VI] respectively represent contents of the structural units (I) to (VI) relative to 100 mol% of the total structural units of the liquid crystal polyester resin.

[Chem. 6]

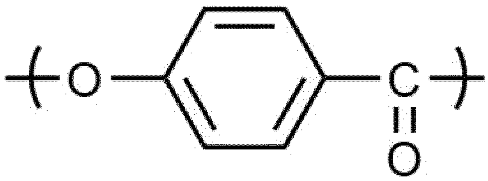

(I)

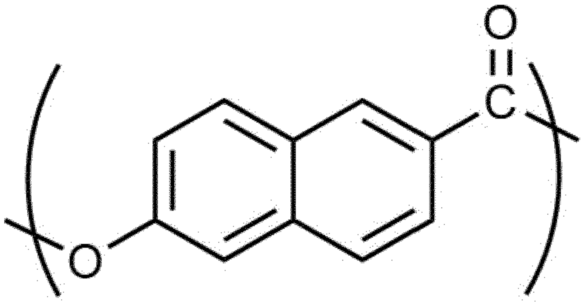

(II)

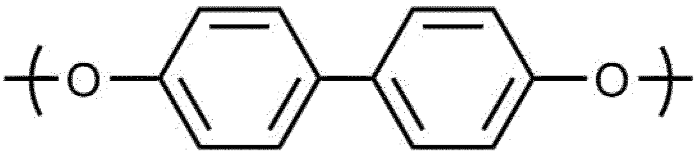

(III)

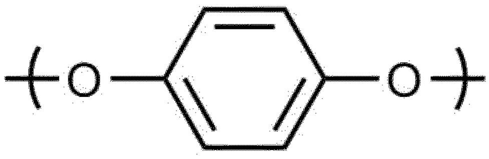

(IV)

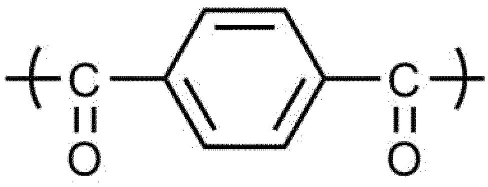

(V)

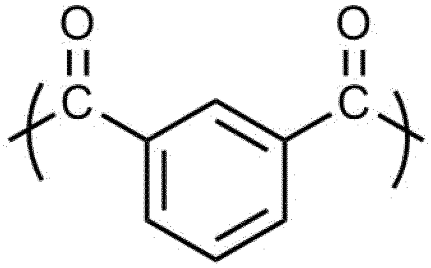

(VI)

The structural units (I) to (VI) are as mentioned above.

For the liquid crystal polyester resin, structural units produced from p-aminobenzoic acid, p-aminophenol and the like, in addition to the above structural units (I) to (VI), can be used as long as the effect of the invention is not impaired.

Since the liquid crystal polyester resin of the present invention includes all of the above-described structural units (I) to (VI) to the extent described above, it becomes still more easier to control the temperature sensitivity coefficient and solidification start temperature described above within a preferred range, and the effects of the present invention that the liquid crystal polyester resin of the present invention is moldable at a wide range of molding temperatures, has excellent molding stability, and has low thickness dependency of fluidity are performed, which is preferable. From the viewpoint of not impairing the effect of the present invention, the total contents of the structural units (I) to (VI) described above is preferably 99 mol% or more, preferably 99.5 mol% or more, and still more preferably 100 mol%, relative to 100 mol% of the

total structural units of the liquid crystal polyester resin.

Further, a ratio of the total amount of the structural units (III) and (IV) and the total amount of the structural units (V) and (VI) ([III] + [IV])/([V] + [VI]) is preferably 0.9 or more and 1.1 or less from the viewpoint of controlling polymerizability.

The monomer as a raw material constituting each of the above structural units is not particularly limited as long as it has a structure capable of forming each structural unit. It is possible to use a derivative of such a monomer in which a hydroxyl group is acylated, a carboxylic acid derivative in which a carboxyl group is converted into an ester, an acid halide, or an acid anhydride, or the like.

The calculation method of the content of each structural unit of the liquid crystal polyester resin will be shown below. First, the content of each structural unit can be obtained by pulverizing the liquid crystal polyester resin, adding tetramethylammonium hydroxide, and performing pyrolysis GC/MS measurement using a GC/MS analyzer (e.g., GCMS-QP5050A manufactured by Shimadzu Corporation). The content of the structural unit not detected or below the detection limit is calculated as 0 mol%.

The melting point (Tm) of the liquid crystal polyester resin is preferably 280°C or more, more preferably 300°C or more, and still more preferably 320°C or more, from the viewpoint of heat resistance. Meanwhile, from the viewpoint of processability, the melting point (Tm) of the liquid crystal polyester resin is preferably 370°C or less, more preferably 360°C or less, and still more preferably 350°C or less. Note that Tm is a value measured using a differential scanning calorimeter as described below.

The melt viscosity of the liquid crystal polyester resin is preferably 3 Pa·s or more, more preferably 5 Pa·s or more, and still more preferably 7 Pa·s or more, from the viewpoint of heat resistance. On the other hand, from the viewpoint of fluidity, the melt viscosity of the liquid crystal polyester resin is preferably 50 Pa·s or less, more preferably 30 Pa·s or less, and still more preferably 20 Pa·s or less.

The melt viscosity is the value measured by a Koka-type flow tester at a temperature of the melting point (Tm) of the liquid crystal polyester resin + 20°C, under the conditions of a shear rate of 1,000/sec

<Method of Producing Liquid Crystal Polyester Resin>

Examples of the method of producing the liquid crystal polyester resin of the present invention include a method of copolymerizing monomers providing structural units (I) to (VI) in contents within the ranges mentioned above, and a method in which monomers providing structural units (I) to (VI) are copolymerized in contents outside the ranges mentioned above, and the resulting two or more types of liquid crystal polyester resins are blended so that the contents of the structural units (I) to (VI) fall within the ranges mentioned above. From the viewpoints of making it easy to control the temperature sensitivity coefficient and solidification start temperature within suitable ranges without taking over the properties of the liquid crystal polyester resin before blending, of being moldable over a wide range of molding temperatures, of having excellent molding stability, and of having a small thickness dependency of fluidity, a method of copolymerizing monomers that provide structural units (I) to (VI) in the contents within the above-mentioned ranges is preferred.

The method of producing a liquid crystal polyester resin of the present invention is not particularly limited, and a known polycondensation method of polyester can be used. From the viewpoint of controlling the temperature sensitivity coefficient and solidification start temperature described above within suitable ranges, taking a method of producing a liquid crystal polyester resin including structural units (I) to (VI) as an example, a method is preferred in which p-hydroxybenzoic acid, 6-hydroxy-2-naphthoic acid, 4,4'-dihydroxybiphenyl, hydroquinone, terephthalic acid, and isophthalic acid are reacted with acetic anhydride to acetylate a phenolic hydroxyl group, followed by acetic acid-eliminating polymerization to produce a liquid crystal polyester resin.

Furthermore, in the production method described above, it is preferable that the following requirements 1 to 3 be satisfied, as it will be easier to control the temperature sensitivity coefficient and solidification start temperature described above within suitable ranges as described above.

1. Acetic acid-eliminating polymerization is performed without a catalyst.
2. Acetic acid-eliminating polymerization is performed under temperature rising conditions, with the average temperature rising rate from 145°C to 270°C being set to 0.3 to 0.8 °C/min.
3. In the step of acetylating the monomer, the amount of acetic anhydride to be used is set to 1.05 to 1.20 molar equivalents of the total of the aromatic hydroxycarboxylic acid and the phenolic hydroxyl groups of the aromatic diol.

Regarding requirement 1 above, the addition of a catalyst to the acetic acid-eliminating polymerization will induce the formation of long chains composed of aromatic hydroxycarboxylic acids, while the reaction proceeds at a high rate. The long chains of the aromatic hydroxycarboxylic acid are highly crystalline. Accordingly, the liquid crystal polyester resin including the long chains of aromatic hydroxycarboxylic acid has improved physical properties such as heat resistance. On the other hand, they not only cause generation of infusible crystals or foreign matters, but also causes rapid solidification

and crystallization from a molten state. Therefore, it becomes difficult to control the temperature sensitivity coefficient and solidification start temperature described above. Thus, it is preferable to perform acetic acid-eliminating polymerization without a catalyst. Specific examples of the catalyst to be added include stannous acetate, tetrabutyl titanate, metal salts including alkali metal and alkaline earth metal salts such as sodium carbonate and calcium carbonate, metal salts composed of organic acids and alkali metals or alkaline earth metals such as potassium acetate and sodium acetate, antimony trioxide, and magnesium metal.

Regarding requirement 2 described above, a process from acetylation of aromatic hydroxycarboxylic acids and aromatic diols to formation of oligomer proceeds in the polymerization temperature range of 145°C to 270°C. In this event, by setting the average temperature rising rate to 0.3 to 0.8 °C/min, formation of oligomer can easily proceed along with transesterification, promoting randomization of the constituent units of the main chain. Therefore, the formation of the long chains of the aromatic hydroxycarboxylic acid described above is suppressed, which makes it easier to control the temperature sensitivity coefficient and solidification start temperature described above. The average temperature rising rate is preferably 0.35 °C/min or more, more preferably 0.4 °C/min or more. In addition, the average temperature rising rate is preferably 0.7 °C/min or less, more preferably 0.65 °C/min or less, still more preferably 0.6 °C/min or less.

Regarding requirement 3 described above, by setting the amount of the acetic anhydride to 1.05 to 1.20 molar equivalents of the total of the phenolic hydroxyl groups, a process of increasing molecular weight from the formation of oligomer can easily proceed along with transesterification, promoting randomization of the constituent units of the main chain. Therefore, the formation of the long chains of the aromatic hydroxycarboxylic acid described above is suppressed, which makes it easier to control the temperature sensitivity coefficient and solidification start temperature described above. The amount of the acetic anhydride is preferably 1.06 molar equivalents or more, more preferably 1.07 molar equivalents or more. In addition, the amount of the acetic anhydride is preferably 1.18 or less, more preferably 1.15 or less.

As described above, by satisfying the requirements 1 to 3 described above, it is possible to suppress generation of the long chains of the aromatic hydroxycarboxylic acid in the liquid crystal polyester resin can be suppressed, and it becomes easier to control the temperature sensitivity coefficient and solidification start temperature described above within suitable ranges.

<Filler>

In order to impart mechanical strength and other properties to the liquid crystal polyester resin, a liquid crystal polyester resin composition containing the liquid crystal polyester resin of the present invention and a filler may be prepared. The filler used in the present invention is not particularly limited, and examples thereof include fibrous fillers, whisker-like fillers, plate-like fillers, powdery fillers, and granular fillers. Specific examples of fibrous fillers, whisker-like fillers include glass fibers, PAN-based or pitch-based carbon fibers; metal fibers such as stainless steel fibers, aluminum fibers and brass fibers; organic fibers such as aromatic polyamide fibers and liquid crystal polyester fibers; gypsum fibers, ceramic fibers, asbestos fibers, zirconia fibers, alumina fibers, silica fibers, titanium oxide fibers, silicon carbide fibers, rock wools, potassium titanate whiskers, barium titanate whiskers, aluminum borate whiskers, silicon nitride whiskers and acicular titanium oxides. Examples of plate-like fillers include mica, talc, kaolin, glass flakes, clay, molybdenum disulfide, and wollastonite. Examples of powdery fillers, granular fillers include silica, glass beads, titanium oxide, zinc oxide, calcium polyphosphate, and graphite. The surface of the above fillers may be treated with a surface treatment agent such as a known coupling agent (for example, a silane-based coupling agent, a titanate-based coupling agent, etc.). Two or more kinds of fillers described above may be used in combination.

Among the fillers described above, it is preferable to use glass fiber, in view of its excellent mechanical strength, particularly tensile strength and bending strength, heat resistance, and dimensional stability. The type of glass fiber is not limited as long as it is generally used for reinforcing resins, and examples thereof include chopped strands of long fiber type or short fiber type, and milled fibers. It is also preferable to use plate-like fillers because of their excellent thin-wall fluidity.

The surface of the glass fillers may be treated with a surface treatment agent such as a known coupling agent (for example, a silane-based coupling agent, a titanate-based coupling agent, etc. The glass fibers may also be coated or bundled with a thermoplastic resin such as an ethylene/vinyl acetate copolymer or a thermosetting resin such as an epoxy resin.

It is possible to further mix, as additives, common additives selected from antioxidants, heat stabilizers (for example, hindered phenol, hydroquinone, phosphite, thioethers and substitutes thereof), UV absorbers (for example, resorcinol, salicylate), anti-colorants such as phosphites and hypophosphites, lubricants and mold release agents (such as montanic acid and metal salts thereof, esters thereof, half esters thereof, stearyl alcohols, stearamides and polyethylene waxes), colorants including dyes or pigments, carbon black as conductive agents or colorants, crystal nucleating agents, plasticizers, flame retardants (bromine-based flame retardants, phosphorus-based flame retardants, red phosphorus, silicone-based flame retardants, etc.), flame retardant aids and antistatic agents, into the liquid crystal polyester resin composition of the present invention as long as the effect of the present invention is not impaired.

In the liquid crystal polyester resin composition of the present invention, the content of the filler is preferably 10 to 200 parts by weight relative to 100 parts by weight of the liquid crystal polyester resin. When the content of the filler is 10 parts by weight or more, the mechanical strength of the molded article can be improved. The content of the filler is

preferably 15 parts by weight or more, more preferably 20 parts by weight or more. On the other hand, the content of the filler of 200 parts by weight or less is preferable because a liquid crystal polyester resin composition can be obtained which has excellent moldability and thin-wall fluidity and can be easily injection molded into small thin-wall molded products. The content of the filler is preferably 150 parts by weight or less, more preferably 100 parts by weight or less.

It is possible to use, as the method of mixing the above-mentioned fillers and additives, for example, a dry blending method in which a filler and other solid additives are mixed with a liquid crystal polyester resin, a solution mixing method in which a filler and other liquid additives are mixed in a liquid crystal polyester resin, a method in which a filler and other additives are added during polymerization of a liquid crystal polyester resin, a method in which a filler and other additives are melt-kneaded with a liquid crystal polyester resin, and the like. Among them, a method of melt-kneading is preferred.

A known method can be used for melt-kneading. Examples of a device used for melt-kneading include a Banbury mixer, a rubber roll machine, a kneader, and a single-screw or twin-screw extruder. Of these, a twin-screw extruder is preferable. The melt-kneading temperature is preferably the melting point of the liquid crystal polyester resin or more and the melting point of + 50°C or less.

Examples of the kneading method include 1) a method in which a liquid crystal polyester resin, a filler and other additives are charged at once from a feeder and then kneaded (batch kneading method), 2) a method in which a liquid crystal polyester resin and other additives are charged from the side feeder, and after kneading, a filler and other additives are added as necessary from the side feeder, followed by kneading (side feeding method), 3) a method in which a liquid crystal polyester resin composition (master pellet) containing other additives in a liquid crystal polyester resin in high concentration is fabricated and then the master pellet is kneaded with the liquid crystal polyester resin and a filler so that the additives has a specified concentration (master pellet method) and the like.

<Molded article>

The liquid crystal polyester resin and the liquid crystal polyester resin composition of the present invention can be formed into a molded article having excellent surface appearance (color tone), mechanical properties and heat resistance by molding methods such as injection molding, extrusion molding, melt-molding such as spinning, press molding, or solution casting film forming. Examples of the molded article as used herein include injection-molded articles, extrusion-molded articles, press-molded articles, sheets, pipes, various films such as unstretched films, uniaxially stretched films and biaxially stretched films, and various fibers such as unstretched yarns and super-stretched yarns. Injection molding is preferred as a molding method, especially from the viewpoint of processability. For melt-molding, it is preferable to melt-mold the liquid crystal polyester resin composition at 370°C or less, more preferably at 360°C or less, from the viewpoint of suppressing degradation of the liquid crystal polyester resin composition and improving mechanical strength.

The liquid crystal polyester resin of the present invention and the molded article obtained by molding the liquid crystal polyester resin composition can be preferably used as electric and electronic components. Examples of the electric and electronic component include flexible printed circuit boards, circuit boards for laminates, printed wiring boards, and three-dimensional circuit boards used for antennas of mobile communications and electronic devices such as personal computers, devices with built-in GPS, cell phones, millimeter wave and quasi-millimeter wave radars such as anticollision radars, tablets and smartphones; lamp reflectors and lamp socket for LED, or the like, communication base station small cell and microcell components for mobile communication terminals, antenna covers, housings, sensors, actuator components of camera modules, connector, relay cases and bases, switches, coil bobbins, and capacitors. Among them, it is useful for connectors, relays, switches, coil bobbins, and actuator components of camera modules that have thin-walled parts of complex shape, from the viewpoint of being moldable at a wide range of molding temperatures, and having low thickness dependency of fluidity.

## Examples

Hereinafter, the present invention will be described by way of examples, but the present invention is not limited to Examples. In Examples, the composition and evaluation of properties of the liquid crystal polyester resin were measured by the following methods.

### (1) Composition Analysis of Liquid Crystal Polyester Resin

To 0.1 mg of pulverized liquid crystal polyester resin pellets, 2 μL of a 25% methanol solution of tetramethylammonium hydroxide was added, and pyrolysis GC/MS measurement was performed using GCMS-QP5050A manufactured by Shimadzu Corporation to determine the composition ratio of each constituent component in the liquid crystal polyester resin.

(2) Measurement of Melting Point (Tm) of Liquid Crystal Polyester Resin

After observation of an endothermic peak temperature ($Tm_1$) observed when the liquid crystal polyester resin is heated under temperature rising conditions of 20°C/min from room temperature using a differential scanning calorimeter DSC-7 (manufactured by PerkinElmer, Inc.), the liquid crystal polyester resin is maintained at a temperature of $Tm_1$ + 20°C for 5 minutes, followed by observation of an endothermic peak temperature observed when the temperature is once fallen to room temperature under temperature falling conditions of 20°C/min and then raised again from room temperature to $Tm_1$ + 20°C under temperature rising conditions of 20°C/min, and the endothermic peak temperature thus obtained was defined as the melting point (Tm).

(3) Melt Viscosity of Liquid Crystal Polyester Resin

Using a Koka-type flow tester CFT-500D (orifice: 0.5φ × 10 mm) (manufactured by Shimadzu Corporation), the melt viscosity of the liquid crystal polyester resin was measured under conditions: temperature of Tm + 20°C and shear rate of 1,000/s.

(4) Evaluation of Moldable Temperature Range

The liquid crystal polyester resin was dried at 150°C for 3 hours using a hot-air dryer, then fed to FANUC α30C injection molding machine (manufactured by FANUC CORPORATION), and 100 shots of continuous molding were performed using a mold capable of molding products of 5.0 mm wide × 50 mm long × 0.2 mm thick, under molding conditions: molding temperature, 90°C; injection speed, 200 mm/s, while adjusting the molding pressure so that the average length of the resulting molded article was 40 mm.
In this case, molding was performed by changing the cylinder temperature in 5°C increments within a range from the melting point of the liquid crystal polyester resin ± 0°C to melting point + 40°C. For the obtained test pieces, the cylinder temperature at which the number of shots providing the test piece having a length of 39 mm or less or 41 mm or more was 5 or less out of 100 shots was determined as a moldable temperature, and a moldable temperature range = (maximum moldable temperature) - (minimum moldable temperature) was calculated. The greater this value, the wider the moldable temperature range.

(5) Evaluation of Thickness Dependency of Fluidity

The liquid crystal polyester resin was dried at 150°C for 3 hours using a hot-air dryer, then fed to FANUC α30C injection molding machine (manufactured by FANUC CORPORATION), a mold capable of molding products of 5.0 mm wide × 50 mm long × 0.2 mm thick was used, under molding conditions: cylinder temperature, melting point of the liquid crystal polyester resin + 10°C; molding temperature, 90°C; injection speed, 200 mm/s, and the molding conditions were adjusted so that the average length of the resulting molded article was 40 mm. Thereafter, 10 pieces were molded under the same molding conditions except that the mold was replaced with a mold capable of further molding products of 5.0 mm wide × 30 mm long × 0.2 mm thick on the flow end side of 5.0 mm wide × 50 mm long × 0.5 mm wide. An average flow length of the 0.2 mm-thick portions of the resulting molded article was calculated. The longer the flow length of the 0.2 mm-thick portion, the smaller the thickness dependency of fluidity, which was evaluated as excellent.

(6) Molding Stability (evaluation of number of shots required for recovery)

The liquid crystal polyester resin pellets obtained in each of Examples and Comparative Examples were hot-air dried using a hot-air dryer at 150°C for 3 hours, and then fed to FANUC α30C injection molding machine manufactured by FANUC CORPORATION, and injection molding was performed with the injection cylinder temperature set to the melting point of the liquid crystal polyester + 15°C, the molding temperature set to 90°C, the injection pressure set to 100 MPa, and the speed set to the minimum filling speed, thereby obtaining connector molded articles shown in FIG. 3. FIG. 3 is a perspective view of the connector molded article having longer faces (2) and shorter faces (3) and an external dimension of a width (6) of 3 mm × height (5) of 2 mm × length (4) of 30 mm. The connector molded article has terminals partitioned by partition walls (8), and the distance between terminals (7) is 0.4 mm, and the thickness of the partition wall (8) which is the thinnest portion of the product is 0.2 mm. The liquid crystal polyester resin or the resin composition was filled through a pin gate G1 (gate diameter 0.3 mm) placed on one shorter face (3) of the connector molded article, and was sufficiently filled up to the wall corner on the opposite side of the gate. After 100 shots of continuous molding were performed, molding was stopped once, the injection cylinder temperature was lowered to 150°C, and allowed to stand for 120 minutes. Thereafter, the injection cylinder temperature was raised to the melting point of the liquid crystal polyester + 15°C, and one purge shot was performed using the same liquid crystal polyester resin or resin composition as in the molding, then continuous

molding was performed under the same conditions with the same mold. The number of shots required to obtain a molded article sufficiently filled up to the wall corner opposite to the gate similarly in the molding, that is, the number of shots required for recovery was evaluated. The wall corner is an area where non-filling is likely to occur after recovery, and excellent molding stability is achieved when the number of shots required for recovery is less than 10.

(7) Evaluation of Temperature Sensitivity Coefficient and Solidification Start Temperature

The liquid crystal polyester resin was dried at 150°C for 3 hours using a hot-air dryer, and then the measurement was performed using a Physica MCR501 rheometer (rheometer manufactured by Anton Paar GmbH) as follows. The liquid crystal polyester resin was placed between parallel plates having a diameter of 25 mm. The measurement was performed in a vibration measurement mode of the rheometer, while setting the gap between the parallel plates to 1 mm, strain to 10%, and frequency to 1 Hz, and maintaining the temperature at Tm + 30°C for 5 minutes, then lowering at 0.17 °C/min to a temperature at which the complex viscosity reached 50,000 (Pa·s), thereby obtaining a rheometer spectrum. The rheometer spectral curve 1 shown in FIG. 1 was obtained by plotting $\Delta T$(°C)=measurement temperature - Tm (°C) on the x-axis and logarithm of the complex viscosity (log($\eta$(Pa·s))) on the y-axis. Based on the resulting rheometer spectrum, B(x) (solidification start temperature) and an absolute value of the slope of a straight line w connecting points A and B (temperature sensitivity coefficient) were calculated according to the procedures described above. The temperature sensitivity coefficient is calculated according to the following formula:

Temperature sensitivity coefficient = |( log($\eta$(Pa·s)) at point A - log($\eta$(Pa·s))) at point B/(20-B(x))|

[Example 1]

In a 5 L reaction vessel equipped with a stirring blade and a distillation tube, 808 parts by weight of p-hydroxybenzoic acid (HBA), 88 parts by weight of 6-hydroxy-2-naphthoic acid (HNA), 229 parts by weight of 4,4'-dihydroxybiphenyl (DHB), 161 parts by weight of hydroquinone (HQ), 428 parts by weight of terephthalic acid (TPA), 19 parts by weight of isophthalic acid (IPA), and 1278 parts by weight (1.07 equivalents of the total of phenolic hydroxyl groups) of acetic anhydride were charged and, after reacting at 145°C for 120 minutes while stirring in a nitrogen gas atmosphere, the temperature was raised from 145°C to 360°C over 4 hours (average temperature rising rate from 145°C to 270°C was 0.9 °C/min). Thereafter, the polymerization temperature was maintained at 360°C and the pressure was reduced to 1.0 mmHg (133 Pa) over 1.0 hour, and after continuously reacting, the polymerization was completed when the stirring torque reached a predetermined value. Then, the polymer was extruded into strands through a spinneret with one circular outlet having a diameter of 6 mm, followed by pelletization using a cutter to obtain a liquid crystal polyester resin (A-1).

[Example 2]

Liquid crystal polyester resin (A-2) was obtained in the same manner as in Example 1, except that the amounts of charge of monomers were changed as follows: HBA, 776 parts by weight; HNA, 66 parts by weight; DHB, 251 parts by weight, HQ, 168 parts by weight; TPA, 447 parts by weight, and IPA, 29 parts by weight.

[Example 3]

Liquid crystal polyester resin (A-3) was obtained in the same manner as in Example 1, except that the amounts of charge of monomers were changed as follows: HBA, 1018 parts by weight; HNA, 264 parts by weight; DHB, 44 parts by weight, HQ, 135 parts by weight; TPA, 214 parts by weight, and IPA, 29 parts by weight.

[Example 4]

Liquid crystal polyester resin (A-4) was obtained in the same manner as in Example 1, except that the amounts of charge of monomers were changed as follows: HBA, 905 parts by weight; HNA, 88 parts by weight; DHB, 109 parts by weight, HQ, 193 parts by weight; TPA, 321 parts by weight, and IPA, 68 parts by weight.

[Example 5]

Liquid crystal polyester resin (A-5) was obtained in the same manner as in Example 1, except that the amounts of charge of monomers were changed as follows: HBA, 469 parts by weight; HNA, 242 parts by weight; DHB, 131 parts by weight, HQ, 309 parts by weight; TPA, 564 parts by weight, and IPA, 19 parts by weight.

[Example 6]

Liquid crystal polyester resin (A-6) was obtained in the same manner as in Example 1, except that the amounts of charge of monomers were changed as follows: HBA, 986 parts by weight; HNA, 88 parts by weight; DHB, 360 parts by weight, HQ, 13 parts by weight; TPA, 321 parts by weight, and IPA, 19 parts by weight.

[Example 7]

Liquid crystal polyester resin (A-7) was obtained in the same manner as in Example 1, except that the amounts of charge of monomers were changed as follows: HBA, 792 parts by weight; HNA, 88 parts by weight; DHB, 251 parts by weight, HQ, 155 parts by weight; TPA, 457 parts by weight, and acetic anhydride, 1314 parts by weight (1.10 equivalents of the total phenolic hydroxyl groups), and the temperature was raised so that the average temperature rising rate from 145°C to 270°C was 0.5 °C/min.

[Example 8]

Liquid crystal polyester resin (A-8) was obtained in the same manner as in Example 1, except that the amounts of charge of monomers were changed as follows: HBA, 905 parts by weight; HNA, 88 parts by weight; DHB, 436 parts by weight, TPA, 321 parts by weight, IPA, 68 parts by weight, and acetic anhydride, 1314 parts by weight (1.10 equivalents of the total phenolic hydroxyl groups), and the temperature was raised so that the average temperature rising rate from 145°C to 270°C was 0.5 °C/min.

[Example 9]

Liquid crystal polyester resin (A-9) was obtained in the same manner as in Example 1, except that the temperature was raised so that the average temperature rising rate from 145°C to 270°C was 0.5 °C/min.

[Comparative Example 1]

Liquid crystal polyester resin (A'-10) was obtained in the same manner as in Example 1, except that the amounts of charge of monomers were changed as follows: HBA, 870 parts by weight; DHB, 352 parts by weight, HQ, 89 parts by weight; TPA, 292 parts by weight, and IPA, 157 parts by weight.

[Comparative Example 2]

Liquid crystal polyester resin (A'-11) was obtained in the same manner as in Example 1, except that the amounts of charge of monomers were changed as follows: HBA, 808 parts by weight; HNA, 88 parts by weight; DHB, 501 parts by weight, TPA, 408 parts by weight, and IPA, 39 parts by weight.

[Comparative Example 3]

Liquid crystal polyester resin (A'-12) was obtained in the same manner as in Example 1, except that the amounts of charge of monomers were changed as follows: HBA, 970 parts by weight; HNA, 88 parts by weight; DHB, 196 parts by weight, HQ, 116 parts by weight; and TPA, 350 parts by weight.

[Comparative Example 4]

Liquid crystal polyester resin (A'-13) was obtained in the same manner as in Example 1, except that the amounts of charge of monomers were changed as follows: HBA, 743 parts by weight; HNA, 176 parts by weight; HQ, 296 parts by weight; TPA, 292 parts by weight, and IPA, 156 parts by weight.

[Comparative Example 5]

Liquid crystal polyester resin (A'-14) was obtained in the same manner as in Example 1, except that the amounts of charge of monomers were changed as follows: HBA, 937 parts by weight; HNA, 44 parts by weight; DHB, 261 parts by weight, HQ, 103 parts by weight; TPA, 292 parts by weight, and IPA, 97 parts by weight.

[Comparative Example 6]

Liquid crystal polyester resin (A'-15) was obtained in the same manner as in Example 1, except that the amounts of charge of monomers were changed as follows: HBA, 792 parts by weight; HNA, 88 parts by weight; DHB, 251 parts by weight, HQ, 155 parts by weight; TPA, 457 parts by weight, and acetic anhydride, 1231 parts by weight (1.03 equivalents of the total phenolic hydroxyl groups), 1 part by weight of potassium acetate was added as a catalyst, and the temperature was raised so that the average temperature rising rate from 145°C to 270°C was 0.5 °C/min.

[Comparative Example 7]

Liquid crystal polyester resin (A'-16) was obtained in the same manner as in Example 1, except that the amounts of charge of monomers were changed as follows: HBA, 792 parts by weight; HNA, 88 parts by weight; DHB, 251 parts by weight, HQ, 155 parts by weight; and TPA, 457 parts by weight.

[Comparative Example 8]

Liquid crystal polyester resin (A'-17) was obtained in the same manner as in Example 1, except that the amounts of charge of monomers were changed as follows: HBA, 905 parts by weight, HNA, 88 parts by weight, DHB, 436 parts by weight, TPA, 321 parts by weight, and IPA, 68 parts by weight.

The results of the above-described evaluation (1) to (7) performed for the liquid crystal polyester resins obtained in Examples 1 to 9 and Comparative Examples 1 to 8 are shown in Tables 1 and 2.

[Table 1]

Table 1

| | Liquid polyester resin | Structural unit (I) (mol%) | Structural unit (II) (mol%) | Structural unit (III) (mol%) | Structural unit (IV) (mol%) | Structural unit (III) +Structural unit (IV) (mol%) | Structural unit (V) (mol%) | Structural unit (VI) (mol%) | [VI]/[II] | [III]/[IV] | [I]/[II] |
|---|---|---|---|---|---|---|---|---|---|---|---|
| Example 1 | A-1 | 50.0 | 4.0 | 10.5 | 12.5 | 23.0 | 22.0 | 1.0 | 0.25 | 0.84 | 12.5 |
| Example 2 | A-2 | 48.0 | 3.0 | 11.5 | 13.0 | 24.5 | 23.0 | 1.5 | 0.50 | 0.88 | 16.0 |
| Example 3 | A-3 | 63.0 | 12.0 | 2.0 | 10.5 | 12.5 | 11.0 | 1.5 | 0.13 | 0.19 | 5.3 |
| Example 4 | A-4 | 56.0 | 4.0 | 5.0 | 15.0 | 20.0 | 16.5 | 3.5 | 0.88 | 0.33 | 14.0 |
| Example 5 | A-5 | 29.0 | 11.0 | 6.0 | 24.0 | 30.0 | 29.0 | 1.0 | 0.09 | 0.25 | 2.6 |
| Example 6 | A-6 | 61.0 | 4.0 | 16.5 | 1.0 | 17.5 | 16.5 | 1.0 | 0.25 | 16.50 | 15.3 |
| Example 7 | A-7 | 49.0 | 4.0 | 11.5 | 12.0 | 23.5 | 23.5 | 0.0 | 0.00 | 0.95 | 12.3 |
| Example 8 | A-8 | 56.0 | 4.0 | 20.0 | 0.0 | 20.0 | 16.5 | 3.5 | 0.88 | Incalculable | 10.6 |
| Example 9 | A-9 | 50.0 | 4.0 | 10.5 | 12.5 | 23.0 | 22.0 | 1.0 | 0.25 | 0.84 | 12.5 |
| Comparative Example 1 | A'-10 | 53.8 | 0.0 | 16.2 | 6.9 | 23.1 | 15.0 | 8.1 | Incalculable | 2.33 | Incalculable |
| Comparative Example 2 | A'-11 | 50.0 | 4.0 | 23.0 | 0.0 | 23.0 | 21.0 | 2.0 | 0.50 | Incalculable | 12.5 |
| Comparative Example 3 | A'-12 | 60.0 | 4.0 | 9.0 | 9.0 | 18.0 | 18.0 | 0.0 | 0.00 | 1.00 | 15.0 |
| Comparative Example 4 | A'-13 | 46.0 | 8.0 | 0.0 | 23.0 | 23.0 | 15.0 | 8.0 | 1.00 | 0.00 | 5.8 |
| Comparative Example 5 | A'-14 | 58.0 | 2.0 | 12.0 | 8.0 | 20.0 | 15.0 | 5.0 | 2.50 | 1.50 | 29.0 |
| Comparative Example 6 | A'-15 | 49.0 | 4.0 | 11.5 | 12.0 | 23.5 | 23.5 | 0.0 | 0.00 | 0.95 | 12.3 |
| Comparative Example 7 | A'-16 | 49.0 | 4.0 | 11.5 | 12.0 | 23.5 | 23.5 | 0.0 | 0.00 | 0.95 | 12.3 |
| Comparative Example 8 | A'-17 | 56.0 | 4.0 | 20.0 | 0.0 | 20.0 | 16.5 | 3.5 | 0.20 | Incalculable | 10.6 |

[Table 2]

Table 2

| | Liquid polyester resin | Tm(°C) | Melt viscosity (Pa·s) | Moldable temperature range (°C) | Thickness dependency of fluidity (mm) | Molding recovery characteristics (number of shots) | log(η (Pa·s)) at point A | log(η (Pa·s)) at point B | Solidification start temperature (°C) (⊿T at point B) | Temperature sensitivity coefficient |
|---|---|---|---|---|---|---|---|---|---|---|
| Example 1 | A-1 | 332 | 12 | 40 | 20.5 | 5 | 1.52 | 2.10 | -25.5 | 0.013 |
| Example 2 | A-2 | 332 | 12 | 40 | 20.5 | 5 | 1.48 | 2.08 | -26.0 | 0.013 |
| Example 3 | A-3 | 335 | 12 | 30 | 18.0 | 7 | 1.78 | 2.48 | -24.0 | 0.016 |
| Example 4 | A-4 | 335 | 12 | 35 | 19.0 | 6 | 1.43 | 2.08 | -27.0 | 0.014 |
| Example 5 | A-5 | 333 | 12 | 30 | 18.0 | 7 | 1.70 | 2.30 | -20.0 | 0.016 |
| Example 6 | A-6 | 331 | 12 | 25 | 17.0 | 7 | 1.60 | 2.26 | -19.0 | 0.017 |
| Example 7 | A-7 | 335 | 12 | 20 | 17.0 | 7 | 1.70 | 2.40 | -19.0 | 0.018 |
| Example 8 | A-8 | 336 | 12 | 20 | 16.0 | 8 | 1.70 | 2.43 | -20.0 | 0.018 |
| Example 9 | A-9 | 332 | 12 | 40 | 21.5 | 4 | 1.54 | 2.04 | -26.0 | 0.011 |
| Comparative Example 1 | A'-10 | 310 | 12 | 15 | 13.5 | 24 | 1.48 | 2.74 | -22.0 | 0.030 |
| Comparative Example 2 | A'-11 | 332 | 12 | 15 | 14.5 | 14 | 1.15 | 2.40 | -25.0 | 0.028 |
| Comparative Example 3 | A'-12 | 335 | 12 | 15 | 14.5 | 12 | 1.40 | 2.54 | -23.0 | 0.027 |
| Comparative Example 4 | A'-13 | 333 | 12 | 10 | 13.0 | 14 | 1.30 | 2.36 | -17.0 | 0.029 |
| Comparative Example 5 | A'-14 | 322 | 12 | 10 | 13.0 | 13 | 1.30 | 2.40 | -21.0 | 0.027 |
| Comparative Example 6 | A'-15 | 337 | 12 | 10 | 12.0 | 16 | 1.70 | 2.70 | -13.0 | 0.030 |
| Comparative Example 7 | A'-16 | 336 | 12 | 10 | 13.0 | 13 | 1.48 | 2.60 | -22.0 | 0.027 |
| Comparative Example 8 | A'-17 | 338 | 12 | 10 | 13.5 | 12 | 1.40 | 2.54 | -23.0 | 0.027 |

Liquid crystal polyester resin compositions were prepared by further adding fillers to the liquid crystal polyester resins obtained in Example 1 and Comparative Example 5. The fillers used in Example and Comparative Example are listed below. Filler (B)

(B-1) manufactured by Nippon Electric Glass Co., Ltd. Milled fiber (40M-10A)

[Example 10 and Comparative Examples 9]

Using a twin-screw extruder TEM35B equipped with a side feeder manufactured by SHIBAURA MACHINE CO., LTD., each of the liquid crystal polyester resins (A-1, A'-14) obtained in production examples was fed from a hopper in the compounding amount shown in Table 3, the filler (B-1) was fed from a side feeder in the compounding amount shown in Table 3, the cylinder temperature was set to the melting point of the liquid crystal polyester resin + 10°C, and pellets were obtained by melt-kneading. The obtained pellets of the liquid crystal polyester resin composition were hot-air dried and then evaluated in the same manner as in (4) to (6), and the results are shown in Table 3.

[Table 3]

Table 3

| | Liquid polyester resin (parts by weight) | Filler (parts by weight) | Moldable temperature range (°C) | Thickness dependenby of fluidity (mm) | Molding recovery characteristics (number of shots) |
|---|---|---|---|---|---|
| Example 10 | A-1(100) | B-1(43) | 40 | 15.0 | 6 |
| Comparative Example 9 | A'-14(100) | B-1(43) | 10 | 7.5 | 18 |

The results in Tables 1 to 3 show that by using a liquid crystal polyester resin having a temperature sensitivity coefficient of 0.020 or less and solidification start temperature of -35 to -15°C, or by using a liquid crystal polyester resin composition using the resin, a molded article can be obtained which is moldable at a wide range of molding temperatures, and has excellent molding stability and low thickness dependency of fluidity can be obtained.

Industrial Applicability

The liquid crystal polyester resin of the present invention and the liquid crystal polyester resin composition are moldable at a wide range of molding temperatures, and have excellent molding stability and low thickness dependency of fluidity. Therefore, they are suitable for use in electric and electronic components and mechanical components such as connectors, relays, switches, coil bobbins, and actuator components of camera modules.

Reference Signs List

1 Rheometer spectral curve of liquid crystal polyester resin
A Point on the rheometer spectral curve where $\Delta T$ is 20°C
A' Point on the rheometer spectral curve where $\Delta T$ is 10°C
t Straight line passing through points A' and A
C Point on the rheometer spectral curve where complex viscosity is 10,000 Pa·s at temperature equal to or less than melting point
C' Point on the rheometer spectral curve where complex viscosity is 5,000 Pa·s at temperature equal to or less than melting point on the rheometer spectral curve u Straight line passing through points C and C'
B' Intersection of straight line t and straight line u
v Straight line passing through point B' and parallel to y-axis
B Intersection of straight line v and rheometer spectral curve
w Straight line connecting points A and B
S1 Exemplary rheometer spectral curve of the liquid crystal polyester resin of the present invention

S2 Exemplary rheometer spectral curve of a conventional liquid crystal polyester resin
L1 Straight line representing a temperature sensitivity coefficient of S1, corresponding to w in FIG. 1
L2 Straight line representing a temperature sensitivity coefficient of S2, corresponding to w in FIG. 1
2 Longer face
3 Shorter face
4 Length
5 Height
6 Width
7 Distance between terminals
8 Partition wall part
G1 Pin gate

## Claims

**1.** A liquid crystal polyester resin comprising a structural unit derived from aromatic hydroxycarboxylic acid, a structural unit derived from aromatic diol, and a structural unit derived from aromatic dicarboxylic acid,
wherein a content of the structural unit derived from aromatic hydroxycarboxylic acid is 15 to 80 mol%, a content of the structural unit derived from aromatic diol is 2 to 40 mol%, a content of the structural unit derived from aromatic dicarboxylic acid is 2 to 40 mol%, relative to 100 mol% of the total structural unit of the liquid crystal polyester resin, and the following requirement ($\alpha$) is satisfied:

($\alpha$): a temperature sensitivity coefficient measured as described below is 0.020 or less, and B(x) is - 35 to - 15°C;
for a rheometer spectral curve of the liquid crystal polyester resin obtained by measuring the liquid crystal polyester resin as described below using a rheometer and plotting $\Delta T$ (°C) = measurement temperature - Tm (°C) on the x-axis and logarithm of a complex viscosity (log($\eta$(Pa·s))) on the y-axis, where Tm (°C) is a melting point of the liquid crystal polyester resin, taking a point where $\Delta T$ = 20°C as a point A, a point where $\Delta T$ = 10°C as a point A', a point where a complex viscosity $\eta$ is 10,000 Pa·s at a temperature equal to or lower than a melting point as a point C, a point where the complex viscosity $\eta$ is 5,000 Pa·s as a point C', a straight line passing through the point A and the point A' as a straight line t, a straight line passing through the point C and the point C' as a straight line u, an intersection of the straight line t and the straight line u as a point B', a straight line passing through the point B' and parallel to the y-axis as a straight line v, and an intersection of the straight line v and the rheometer spectral curve as a point B, an absolute value of the slope of the straight line w connecting the point A and the point B is defined as a temperature sensitivity coefficient, and a value of $\Delta T$ at the point B is defined as B(x);
the rheometer spectral curve is a curve obtained with a rheometer in a vibration measurement mode at a gap between parallel plates of 1 mm, strain of 10%, and frequency of 1 Hz, by maintaining at a temperature of Tm + 30°C for 5 minutes and then decreasing the temperature at 0.17 °C/sec to a temperature at which the complex viscosity reaches 50,000 (Pa·s); and
the melting point Tm of the liquid crystal polyester resin is an endothermic peak temperature determined as follows: after observation of an endothermic peak temperature $Tm_1$ observed when a liquid crystal polyester is heated under temperature rising conditions of 20°C/min from room temperature in differential scanning calorimetry, the liquid crystal polyester is maintained at a temperature of $Tm_1$ + 20°C for 5 minutes, and then the liquid crystal polyester resin is once cooled to room temperature under temperature falling conditions of 20°C/min and then heated again under temperature rising conditions of 20°C/min, and the endothermic peak temperature thus obtained is defined as the melting point Tm.

**2.** The liquid crystal polyester resin according to claim 1, comprising the structural unit selected from the structural units (I) to (V) below, wherein the following requirements (a) to (d) are satisfied:

$$25 \leq [I] \leq 75 \quad \cdots (a)$$

$$1 \leq [II] \leq 20 \quad \cdots (b)$$

$$2 \leq [III] + [IV] \leq 35 \quad \cdots (c)$$

$$2 \leq [V] \leq 35 \qquad \cdots (d)$$

where [I] to [V] respectively represent contents (mol%) of the structural units (I) to (V) below, relative to 100 mol% of the total structural unit of the liquid crystal polyester resin.

[Chem 1]

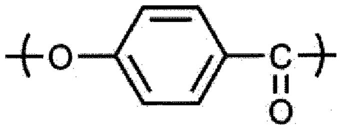

(I)

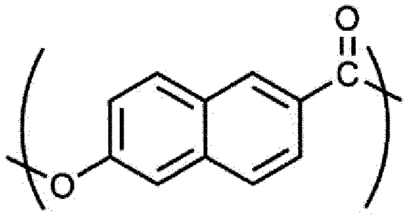

(II)

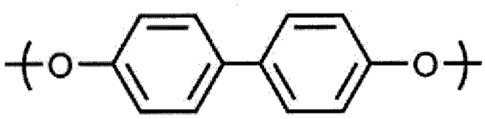

(III)

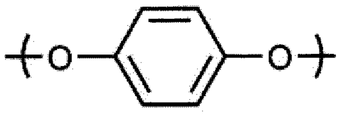

(IV)

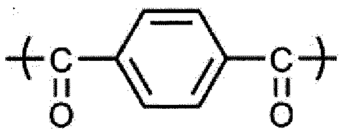

(V)

**3.** The liquid crystal polyester resin according to claim 1 or 2, comprising the structural units (II) and (VI) below, wherein the following requirements (e) and (f) are satisfied:

$$0.01 \leq [VI] \leq 10 \qquad \cdots (e)$$

$$[VI]/[II] < 1 \qquad \cdots (f)$$

where [II] and [VI] respectively represent contents (mol%) of the structural units (II) and (VI) below, relative to 100 mol% of the total structural unit of the liquid crystal polyester resin.

[Chem 2]

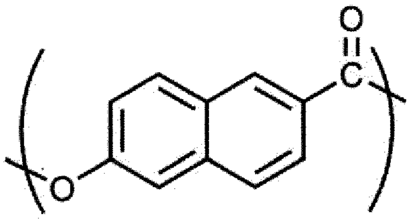

(II)

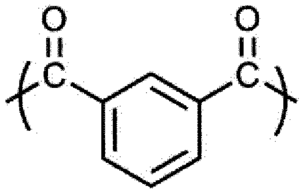

(VI)

**4.** The liquid crystal polyester resin according to any one of claims 1 to 3, comprising a structural unit selected from the structural units (I) to (VI) below, wherein the following requirements (g) to (l) are satisfied:

$$25 \leq [I] \leq 75 \quad \cdots (g)$$

$$1 \leq [II] \leq 20 \quad \cdots (h)$$

$$2 \leq [III] + [IV] \leq 35 \quad \cdots (i)$$

$$2 \leq [V] \leq 35 \quad \cdots (j)$$

$$0.01 \leq [VI] \leq 10 \quad \cdots (k)$$

$$[VI]/[II] < 1 \quad \cdots (l)$$

where [I] to [VI] respectively represent contents (mol%) of the structural units (I) to (VI) below, relative to 100 mol% of the total structural unit of the liquid crystal polyester resin.

[Chem 3]

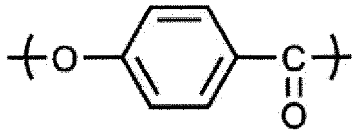

(I)

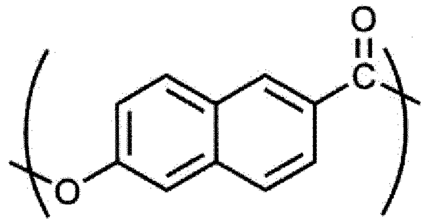

(II)

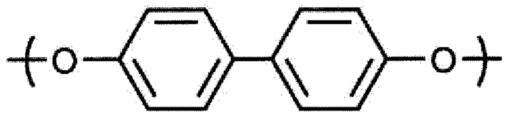

(III)

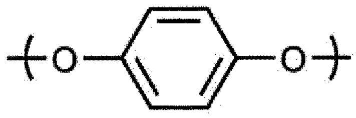

(IV)

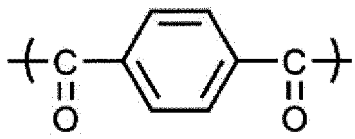

(V)

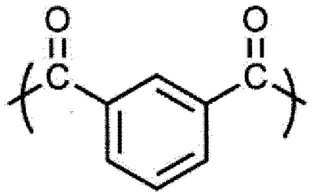

(VI)

5. The liquid crystal polyester resin according to any one of claims 1 to 4, wherein the following requirement (m) is further satisfied:

$$0 < [III]/[IV] < 1.5 \cdots (m)$$

where [III] and [IV] respectively represent contents (mol%) of the structural units (III) and (IV) below, relative to 100 mol% of the total structural unit of the liquid crystal polyester resin.

6. The liquid crystal polyester resin according to any one of claims 1 to 5, wherein the following requirement (n) is further satisfied:

$$99 \leq [I] + [II] + [III] + [IV] + [V] + [VI] \leq 100 \cdots (n)$$

where [I] to [VI] respectively represent a content (mol%) of the structural units (I) to (VI), relative to 100 mol% of the total structural unit of the liquid crystal polyester resin.

7. The liquid crystal polyester resin composition according to any one of claims 1 to 6, containing 10 to 200 parts by weight of a filler relative to 100 parts by weight of the liquid crystal polyester resin.

8. A molded article comprising the liquid crystal polyester resin according to any one of claims 1 to 6, or the liquid crystal polyester resin composition according to claim 7.

9. The molded article according to claim 8, wherein the molded article is any one selected from the group consisting of a connector, a relay, a switch, a coil bobbin, and an actuator component of a camera module.

Fig. 1

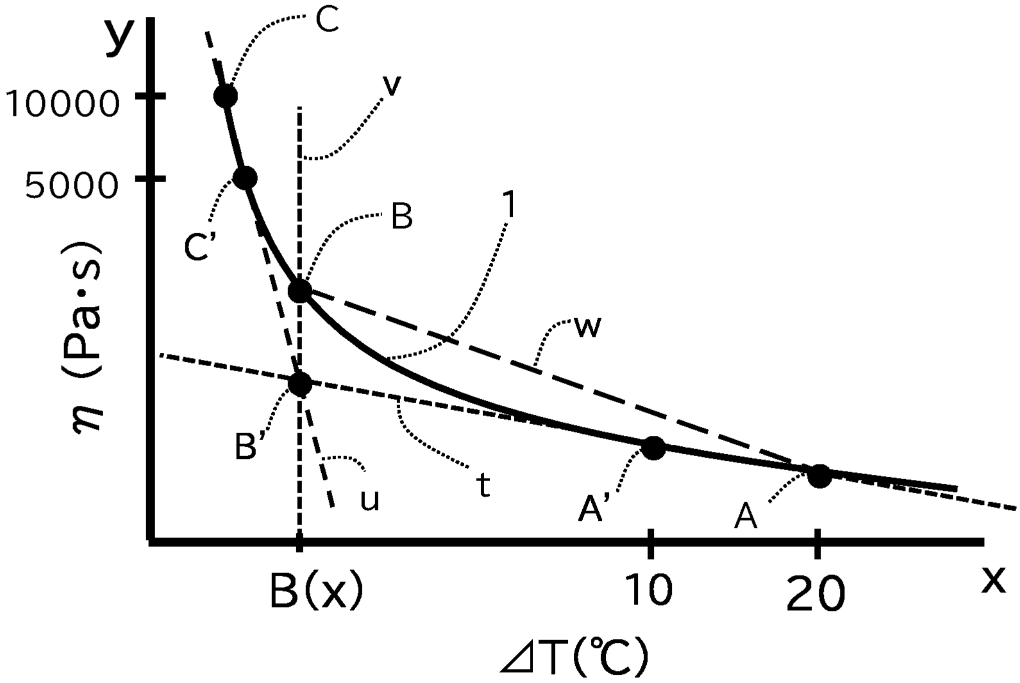

Fig. 2

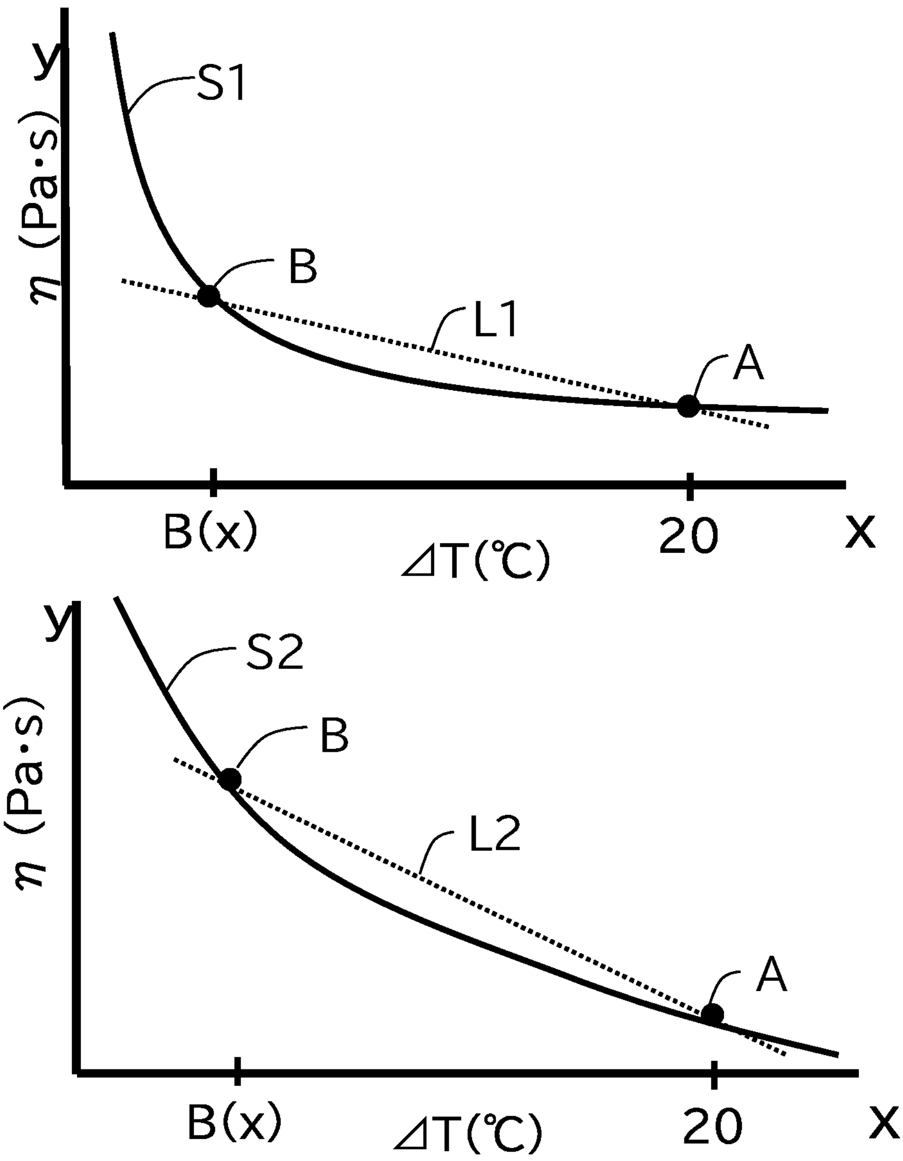

Fig. 3

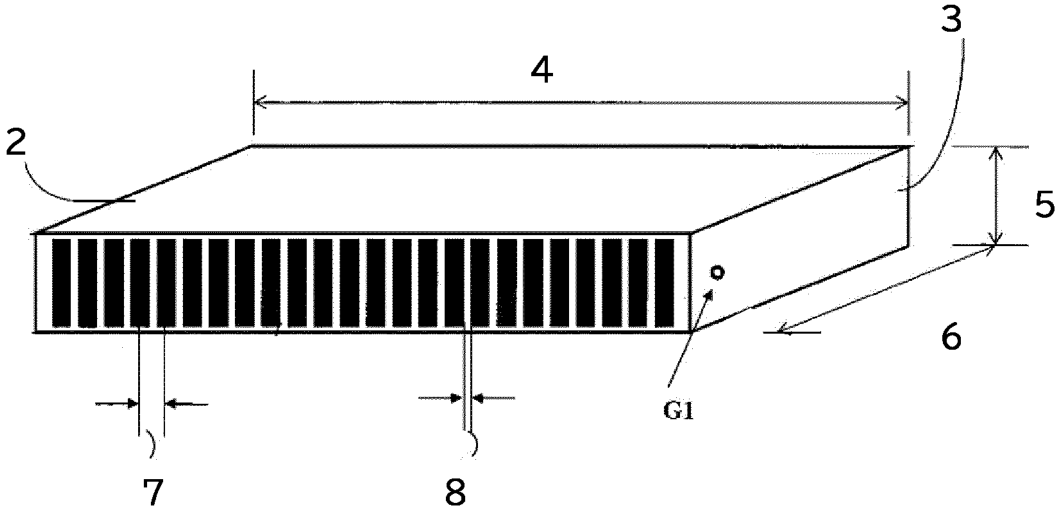

**INTERNATIONAL SEARCH REPORT**

International application No.
**PCT/JP2023/014353**

**A. CLASSIFICATION OF SUBJECT MATTER**

***C08G 63/60***(2006.01)i; ***C08K 3/013***(2018.01)i; ***C08L 67/00***(2006.01)i
FI: C08G63/60; C08L67/00; C08K3/013

According to International Patent Classification (IPC) or to both national classification and IPC

**B. FIELDS SEARCHED**

Minimum documentation searched (classification system followed by classification symbols)

C08G63/60; C08K3/013; C08L67/00-67/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2018/056294 A1 (TORAY INDUSTRIES, INC.) 29 March 2018 (2018-03-29) claims, paragraphs [0066], [0072]-[0103] | 1-2, 6-9<br>3-5 |
| X<br>A | JP 2017-193704 A (TORAY INDUSTRIES, INC.) 26 October 2017 (2017-10-26) claims, paragraphs [0060], [0077]-[0116] | 1-2, 6-9<br>3-5 |
| A | WO 2012/090406 A1 (TORAY INDUSTRIES, INC.) 05 July 2012 (2012-07-05) | 1-9 |
| A | JP 2009-108180 A (SUMITOMO CHEMICAL CO., LTD.) 21 May 2009 (2009-05-21) | 1-9 |
| A | WO 2015/016141 A1 (TORAY INDUSTRIES, INC.) 05 February 2015 (2015-02-05) | 1-9 |
| A | KR 10-2017-0070866 A (SE YANG POLYMER CO., LTD.) 23 June 2017 (2017-06-23) | 1-9 |
| A | CN 109705322 A (KINGFA SCIENCE AND TECHNOLOGY CO., LTD.) 03 May 2019 (2019-05-03) | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 June 2023** | **04 July 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/014353**

**C. DOCUMENTS CONSIDERED TO BE RELEVANT**

| Category* | Citation of document, with indication, where appropriate, of the relevant passages | Relevant to claim No. |
|---|---|---|
| A | CN 110982050 A (JIANGMEN DZT ENGINEERING PLASTICS TECHNOLOGY CO., LTD.) 10 April 2020 (2020-04-10) | 1-9 |

Form PCT/ISA/210 (second sheet) (January 2015)

**INTERNATIONAL SEARCH REPORT**
**Information on patent family members**

International application No.
**PCT/JP2023/014353**

| Patent document cited in search report | Publication date (day/month/year) | Patent family member(s) | Publication date (day/month/year) |
|---|---|---|---|
| WO 2018/056294 A1 | 29 March 2018 | JP 2019-6973 A | |
| | | CN 109790361 A | |
| | | KR 10-2019-0055792 A | |
| | | TW 201817788 A | |
| JP 2017-193704 A | 26 October 2017 | (Family: none) | |
| WO 2012/090406 A1 | 05 July 2012 | US 2013/0270481 A1 | |
| | | EP 2660265 A1 | |
| | | KR 10-1313501 B1 | |
| | | CN 103282404 A | |
| | | TW 201231551 A | |
| JP 2009-108180 A | 21 May 2009 | (Family: none) | |
| WO 2015/016141 A1 | 05 February 2015 | US 2016/0145380 A1 | |
| | | CN 105593266 A | |
| | | TW 201509987 A | |
| KR 10-2017-0070866 A | 23 June 2017 | (Family: none) | |
| CN 109705322 A | 03 May 2019 | (Family: none) | |
| CN 110982050 A | 10 April 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021024985 A
- JP 2017137438 A
- WO 2018101214 A
- JP 2012126842 A
- WO 2012137636 A
- WO 201351346 A
- JP 2016523291 A
- JP 2004256656 A